Europäisches Patentamt

European Patent Office

Office européen des brevets

(19)

(11) EP 1 122 656 A2

(12) EUROPEAN PATENT APPLICATION

(43) Date of publication:
08.08.2001 Bulletin 2001/32

(51) Int Cl.⁷: G06F 17/30

(21) Application number: 01300678.8

(22) Date of filing: 25.01.2001

(84) Designated Contracting States:
**AT BE CH CY DE DK ES FI FR GB GR IE IT LI LU MC NL PT SE TR**
Designated Extension States:
**AL LT LV MK RO SI**

(30) Priority: **25.01.2000 US 490462**

(71) Applicant: **TekInsight.Com. Inc.**
**New York, NY 10004 (US)**

(72) Inventors:
• **Kalpaxis, Arion A.**
**New York, NY 11379 (US)**
• **Kalpaxis, Leander L.**
**New York, NY 11385 (US)**
• **Choudhury, Nurul**
**New York, NY 10583 (US)**

(74) Representative: **Harrison, Ivor Stanley et al**
**Withers & Rogers,**
**Goldings House, 2 Hays Lane**
**London SE1 2HW (GB)**

(54) **Universal resource locator and navigation method**

(57)    A system and method for locating and identifying information over an interactive communications network. The system comprises a stored program controlled apparatus for receiving user input information. A server provides telephone number-based locator service applications, the server having a program for receiving and processing telephone number-based resource locator information input by a user. The program controlled apparatus is linked to the server by a communications infrastructure. A server database maintains telephone number-based resource locator information and corresponding universal resource locator address information for access by the user. The program controlled apparatus has a first program for interactive network navigation, a second program for detecting telephone number-based resource locator input, and a third program for creating a telephone number-based locator service query and transmitting the query to the server.

FIG. 1

**Description**

The present invention relates generally to network navigation and, more particularly, to a universal system and method for locating and identifying information over an interactive communications network.

To navigate a communications network, data directories are typically used for identifying and locating sites where a specified data set may be found. In the case of land and satellite based telephonic networks, telephone numbers have long been the standard identifiers, serving as the primary locator for virtually any entity including individuals, businesses, government agencies and the like. The Internet, on the other hand, uses a separate and uncomplimentary directory, namely a universal resource locator (or URL). The URL usually consists of a text string that uniquely identifies a resource, such as a Web page. Conventional URL's have the following sytax:

Protocol + machine and domain name + name of resource + parameters of resource

To locate a Web page, this syntax must initially be translated to a resource name, e.g., a Web page. The translation process is performed in two steps. First, the particular machine that holds the resource is identified and located. This is typically done by converting or translating the machine name to an IP address. An IP address consists of four numbers separated by periods, e.g., 173.271.12.41. Once such a number has been obtained, it is a relatively straight forward task to transmit information to a machine linked to the Internet.

Web browsers, for example, typically use a domain name service (or DNS) for this purpose. DNS is a basic protocol that returns an IP address for a machine name input. DNS architecture is considered well know to those skilled in the art and further description is considered unnecessary for purposes of illustration of the present invention.

After the machine's IP address or URL has been located, the second step of the translation process is performed, namely the browser connects the user to the corresponding machine or Web server and sends the complete URL to the same. The server then locates the resource desired and, in response to the user, returns the corresponding Web page.

By conventional wisdom, URLs are an uncomplicated and effective method for locating pages on the World Wide Web. However, with the growth of the Internet as a primary media for commerce, catchy words and phrases are registered for Web sites long before the sites are constructed or the corresponding businesses even exist. Some individuals have even resorted to registering brand names and trademarks of established and well-known businesses, then holding the corresponding domains for ransom. Even commonly used names of local businesses have been registered, forcing most businesses and the like to register under a domain name that differs somewhat from the trade name under which they are best known. These names have varied from minor modifications to their trade names such as use of a suffix, e.g., volvocars.com, to names that are considerably more difficult for the customer to identify, e.g., mlol.ml.com.

Hence, if the business URL is not known nor readily apparent, for the customer to access their Web page or contact the business on-line, he or she must resort to a search engine, such as www.yahoo.com or the like. Typically, the user randomly inputs keywords. The engine then returns a list of hits, often voluminous, through which the user must view one-by-one until the desired resource, e.g., individual, business and/or their Web page, is found. While relatively useful, search engines have not only been found slow and cumbersome, but also ineffective for locating the specific resource desired. An improved system and method is therefore desired for accessing information quickly, simply, and efficiently over the Internet and the like.

**SUMMARY OF THE INVENTION**

According to one aspect of the present invention is a method for locating and identifying information over an interactive communications network. The method comprises the steps of: (i) inputting a resource locator to a stored program controlled apparatus for receiving user input information, (ii) parsing the resource locator input, (iii) if the resource locator is a telephone number, creating a telephone number-based locator service query, (iv) transmitting the query to a telephone number-based locator service housed on a server, (v) accessing a server database of the locator service having a table of telephone numbers and corresponding universal resource locator addresses, (vi) matching the resource locator input to a telephone number in the database and corresponding universal resource locator addresses, (vii) receiving the matched universal resource locator address from the telephone number-based locator service, (viii) opening a connection to the IP address port corresponding to the universal resource locator, and (ix) accessing the resource corresponding to the universal resource locator.

In accordance with another aspect of the present invention is a method for locating and identifying information over an interacive communications nework. The method comprises the steps of: (i) inputting a resource locator to a stored program controlled appararus for receiving user input information, (ii) parsing the resource locator input, (iii) if the resource locator is a telephone number, creating a telephone number-based locator service query, (iv) transmitting the query to a telephone number-based locator service housed on a server, (v) accessing a server database of the locator service having a table of telephone numbers and corresponding universal resource locator addresses, (vi) matching the resource locator input to a telephone number in the database and corresponding universal resource locator addresses, (vii) receiving the matched universal resource locator address from the telephone number-based locator service, (viii) opening a connection to the IP address port corresponding to the universal resource locator, (ix) transmitting hypertext transport protocol confirmation to the user that a connection to the IP address port is established, and (x) accessing the resource corresponding to the universal resource locator.

According to a further aspect of the present invention is a method for locating and identifying information over an interactive communications network. The method comprises the steps of: (i) inputting a resource locator to a stored program controlled apparatus for receiving user input information, (ii) parsing the resource locator input, (iii) if the resource locator is a telephone number with text added after the number, identifying the telephone number, (iv) extracting the text after the number from the telephone number and text string from step iii above, (v) creating a telephone number-based locator service query, (vi) transmitting the query to a telephone number-based locator service housed on a server, (vii) accessing a server database of the locator service having a table of telephone numbers and corresponding universal resource locator addresses, (viii) matching the resource locator input to a telephone number in the database and corresponding first universal resource locator address, (ix) receiving the matched first universal resource locator address from the telephone number-based locator service, (x) analyzing the text added after the number as to whether the corresponding first universal resource locator address supports text-based queries, (xi) creating a second universal resource locator comprising the first universal resource locator address and the text added after the number, (xii) transmitting the second universal resource locator to the server, (xi) opening a connection to the IP address port corresponding to the second universal resource locator address, and (xii) accessing the resource corresponding to the second universal resource locator.

In accordance with still another aspect of the present invention is a method for locating and identifying information over an interactive communications network. The method comprises the steps of: (i) inputting a resource locator to a stored program controlled apparatus for receiving user input information, (ii) parsing the resource locator input, (iii) if the resource locator is a telephone number with text added after the number, identifying the telephone number, (iv) extracting the text after the number from the telephone number and text string from step iii above, (v) creating a telephone number-based locator service query (vi) transmitting the query to a telephone number-based locator service housed on a server, (vii) accessing a server database of the locator service having a table of telephone numbers and corresponding universal resource locator addreses, (viii) matching the resource locator input to a telephone number in the database and corresponding first universal resource locator address, (ix) receiving the matched first universal resource locator address from the telephone number-based locator service, (x) analyzing the text added after the number as to whether the corresponding first universal resource locator address supports text-based queries, (xi) creating a second universal resource locator comprising the first universal resource locator address and the text added after the number, (xii) transmitting the second universal resource locator to the server, (xi) opening a connection to the IP address port corresponding to the second universal resource locator address, (ix) transmitting hypertext transport protocol confirmation to the user that a connection to the IP address port is established, and (x) accessing the resource corresponding to the second universal resource locator address.

According to yet another aspect of the present invention is a system for locating and identifying information over an interactive communications network. The system comprises:

a stored program controlled apparatus for receiving user input information;
a server for providing telephone number-based locator service applications;
a communications infrastructure linking the program controlled apparatus to the server, and
a server database for maintaining telephone number-based resource locator information and corresponding universal resource locator address information.

According to still a further aspect of the present invention is a system for locating and identifying information over an interactive data communications network. The system comprises:

a stored program controlled apparatus for receiving user input information;
a server for providing telephone number-based locator service applications, the server having a program for receiving and processing telephone number-based resource locator information input by a user,
a communications infrastructure linking the program controlled apparatus to the server, and
a server database for maintaining telephone number-based resource locator information and corresponding universal resource locator address information,
the program controlled apparatus having a first program for interactive network navigation, a second program for detecting telephone number-based resource locator input, and a third program for creating a telephone number-based locator service query and transmitting the query to the server.

In accordance with yet a further aspect of the present invention is a system for locating and identifying information over an interactive data communications network. The system comprises:

a stored program controlled apparatus for receiving user input information;
a server for providing telephone number-based locator service applications;
a communications infrastructure linking the program controlled appararus to the server, and
a server database for maintaining telephone number-based resource locator information and corresponding universal resource locator address information,
the program controlled apparatus having a first program for interactive network navigation, a second program for detecting telephone number-based resource locator input, and a third program for creating a telephone number-based locator service query and transmitting the query to the server,
the server having a program for receiving and processing telephone number-based resource locator information input by a user, the program including a first function for accessing a server database of the locator service having a table of telephone numbers and corresponding universal resource locator addresses, a second function for matching the resource locator input to a telephone number in the database and corresponding universal resource locator addresses, a third function for receiving the matched universal resource locator address from the locator service, a fourth function for opening a connection to the IP address port corresponding to the universal resource locator, and a fifth function for transmitting hypertext transport protocol confirmation to the user that a connection to the IP address port is established.

Accordingly, it is an object of the present invention to provide an improved universal resource locator and intrasite navigation method.
It is another object of the present invention to provide a quick, simple, and effective system and method for locating a desired resource on an interactive communications network.
It is a further object of the present invention to provide an economical, reliable system and method for navigation over the Internet or the like.
It is yet another object of the present invention to allow a user to readily locate a resource on the Internet without using its universal resource locator or a Web browser.
It is still another object of the present invention to establish the alphanumeric numbering system of telephone networks locally and world wide as universal resource locators for the Internet or the like.
It is yet a further object of the present invention to expand use of the Internet for commerce by simplifying and hastening the on-line resource location process.
Another object of the present invention is to provide a system for readily locating and identifying information over an interactive data communications network.
The present invention will now be further described by reference to the following drawings which are not intended to limit the accompanying claims.

## BRIEF DESCRIPTION OF THE DRAWINGS

FIG. 1 is a flow diagram illustrating a method for locating and identifying information over an interactive data communications network, according to one aspect of the present invention;
FIG. 2 is a flow diagram illustrating a conventional method for locating and identifying information over an interactive data communications network;
FIG. 3 is a schematic diagram of a method for locating and identifying information over an interactive data communications network, in accordance with another aspect of the present invention system; and
FIG. 4 is a schematic diagram of a specific, illustrative system for locating and identifying information over an interactive data communications network, in accordance with the present invention system.
The same numerals are used throughout the figure drawings to designate similar elements. Still other objects and advantages of the present invention will become apparent from the following description of the preferred embodiments.

**DETAILED DESCRIPTION OF THE PREFERRED EMBODIMENTS**

The present invention relates generally to a system and method for using traditional telephonic identifiers on-line as URL's, alternatively or concurrently with existing IP addresses. Telephone networks and numbers are an established, well-known method of communication. For decades, businesses have used the reference letters on telephone keypads to spell out the names of their businesses and, thereby, input their corresponding telephone numbers. Especially popular in this connection are catchy names and other easy to remember identifiers with 1-800 number exchanges. Accordingly, telephone numbers have not only become a common form of advertising, but also easily remembered resource locators.

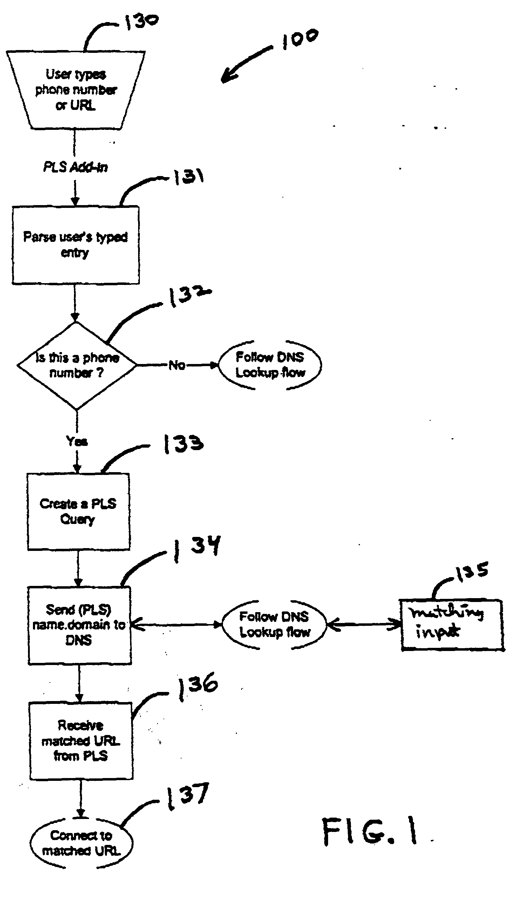

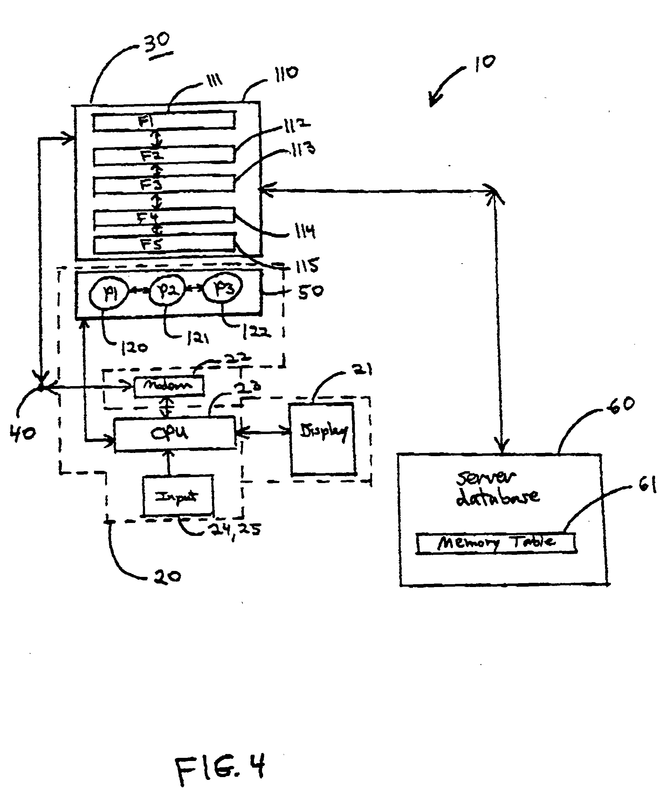

Referring now to the drawings and, more particularly, to FIGS. 1-4, there is shown a specific, illustrative system 10 and method 100 for locating and identifying information over an interactive data communications network using telephonic identifiers and/or the like. According to one aspect of the present invention, as shown in FIG. 4, is system 10 including a stored program controlled apparatus 20 for receiving user input information. A server 30 is linked to the program controlled apparatus by a communications infrastructure 40 to provide a telephone number-based locator service 50 (or "PLS" for phone locator service). Telephone number-based resource locator information and corresponding universal resource locator address information are then maintained on a server database 60 for use in network navigation.

At the kernel of the present invention is (i) an Internet browser extension or plug-in 121 for recognizing and processing telephone number-based input, and (ii) the telephone number-based resource locator service 50. More specifically, in contrast to conventional URL's that must either be remembered by the user or obtained by resort to a search engine, the present invention provides the direct approach of a PLS. A PLS, according to various aspects of the present invention, is a service similar to DNS that rides on a server platform. In this connection, not only does a PLS allow fast, reliable access to a desired on-line resource, but it also directs the user to a precise on-line destination, e.g., a Web page or the like. Moreover, this is accomplished without Web exploration, i.e., through use of a search engine or descending through layers of pages of a Web site before locating the particular page desired.

Generally speaking, server 30 is equipped with programming for receiving and processing telephone number-based resource locator information that has been input by the user. Preferably, at least one program 110 is provided with one or more functions for accomplishing these tasks. A first function 111 is preferably available for accessing the server database corresponding to the locator service. A memory table 61 of telephone numbers with corresponding universal resource locator addresses is desirably housed by server database 60.

It is preferred that a second function 112 also be provided for matching the resource locator input to the same telephone number in the database and its corresponding universal resource locator address. Also, a third function 113 preferably operates to receive the matched universal resource locator address from the PLS. A fourth function 114 is considered useful for opening a connection to the IP address port corresponding to the universal resource locator. Finally, a fifth function 115 effects transmission of hypertext transport protocol confirmation to the user indicating that a connection to the IP address port has been established. Except as set forth herein, PLS is substantially analogous in operation, structure and protocol to DNS, the details of which are known to those skilled in the art.

Program controlled apparatus 20, e.g., an Intel Pentium-based, ISP equipped, desktop computer, laptop or the like, is preferably used to receive user input information and to house programming for inter- and intra-system communications. The apparatus is preferably suitable for operation on a 32-bit wintel platform with a TCP/IP connection to the server. Also provided is a display monitor 21, a communications modem 22, e.g., a conventional, Internet compatible modem, a central processing unit 23, and a mouse 24, keyboard 25 and/or other conventional input device. Desirably, the device is suitable for interactive connection to and communications with server 30, e.g., 32-bit, platform independent via JAVA, for sending and receiving data sets over the Internet, an Intranet, an Extranet or the like. Optionally, as indicated in FIG. 4, the modem and display, alone or in combination, are housed with or, in the alternative, separately from the central processing unit.

Although the present invention is shown and described in connection with manual input devices, it is understood that other methods of input, e.g., voice activation technology or the like, may be utilized, alternatively or concurrently with the foregoing, within the spirit and scope of the present invention.

The communications network 40 linking the program controlled apparatus to the server is preferably of a traditional nature, such as conventional wire-based, fiber optic, wireless and/or like connections, e.g., a land-based telephone system, satellite or like telecommunications network. Their structure and function are considered well known to those skilled in the art and further description is believed unnecessary for purposes of illustrating the present invention.

Turning now to operative aspects of the present invention, the apparatus houses a first program 120 for interactive network navigation. Appropriate first programs include conventional Web browsers, for example, Netscape Navigator®, Microsoft Internet Explorer®, and the like. These programs typically utilize URL's to locate Web pages. Such Web browsers and the fundamentals of their operation are considered well known to those skilled in the art Further explanation is considered unnecessary for appropriate description of the present invention.

A second program 121, in accordance with one aspect of the present invention, is provided on the apparatus for detecting telephone number-based resource locator input. This program is preferably in the form of a plug-in to the first program. Traditional Web browsers such as Netscape Navigator® and Microsoft Internet Explorer® readily support such software that extend browser capability, as will be appreciated by those skilled in the art. Specifically, a PLS phone plug-in of the present invention is adapted for recognizing any universal resource locator that resembles a telephone number. According to one aspect of the present invention is a telephone number plug-in, e.g., a standard IE 4.0 or 5.0 Active X plugin, that intercepts the browser's "Navigate to Location" function and checks to see if the URL requested is in the form of a telephone number. Example numbers, in this connection, include 1 800 234 5678,1 800 CALLATT, 1 888 FLOWERS, 1 234 456 1234, 1 212 271 8550, and 1 914 777 1234.

If a telephone number is detected, then the plug-in alters the URL to the following form: "http://www.goPhone. com?phone=18002345678". This URL directs the browser to the goPhone.com Web site with the telephone number as a parameter. Any text entered after the number is passed as a second parameter. This feature allows the user to access specific features offered by the Web site selected.

For instance, upon entry of "1 800 FLOWERS to england", the plug-in creates a URL that will navigate to the 1 800 FLOWERS Web site and deliver the user directly to the page for international delivery. The URL arrived at would have the following structure: "http://www.goPhone?phone=1800FLOWERS&location=to+england".

In general, the details of plug-in implementation vary from browser to browser. For instance, in the case of implementing "Browser Helper DLL" for Microsoft Internet Explorer®, it is noted that Explorer's® architecture supports an extension of the program's abilities through "helper" libraries. In this context, a plug-in would be developed as such a library. The "helper" library would receive notification of the Internet addresses being supplied to Internet Explorer®. This library would then process the address to determine whether it is an appropriate format to be supplied to the PLS (i.e., a telephone number) or whether it should be passed along to Internet Explorer® unaltered.

Creation of a plug-in, in accordance with the present invention, is considered rudimentary and is known by those skilled in the art of Web browser applications. Further explanation is, therefore, believed unnecessary for purposes of illustrating the present invention.

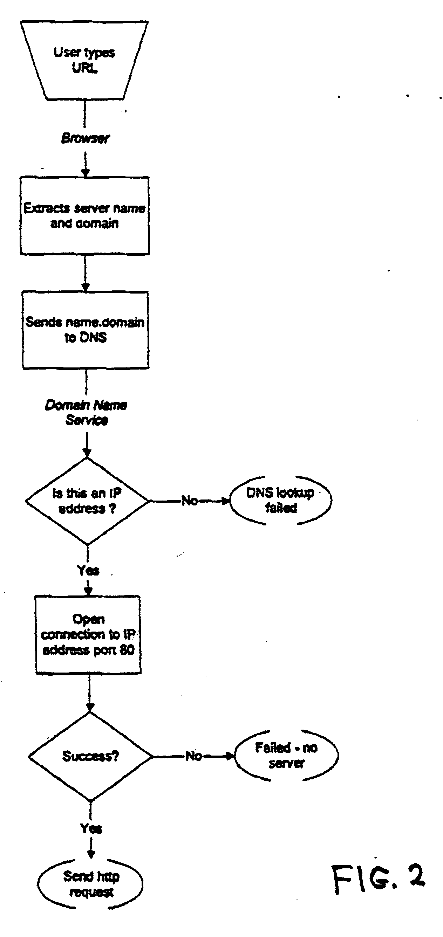

In accordance one aspect of the present invention, the program controlled apparatus is also equipped with a third program 122 for creating a telephone number-based locator service (or PLS) query and transmitting the query to the server. In this manner, the plug-in utilizes the PLS to locate the corresponding resource or Web page associated with the telephone number recognized. It is noted that if the universal resource locator is not a telephone number, then the browser desirably processes the universal resource locator through a conventional domain name service (DNS), as shown in FIG. 2, the function of which will be appreciated by those skilled in the art.

In operation, as illustrated in FIG. 1, the user initially enters or inputs 130, using the first program, a resource locator into stored program controlled apparatus 20 for receiving user input information. The second program parses 131 the resource locator input. If the resource locator is a telephone number 132, a telephone number-based locator service query is created 133 and transmined 134 to the PLS housed on the server. If not, the resource locator is processed through a domain name service as illustrated generally in FIG. 2.

The server database of the phone locator service is then accessed, in particular, table 61 of telephone numbers and corresponding universal resource locator addresses. Next, the resource locator input is matched 135 with a similar or identical telephone number in the database and its corresponding universal resource locator address, and received 136 from the locator service. More particularly, a connection is opened 137 with the IP address port corresponding to the universal resource locator matched. Hypertext transport protocol confirmation is, in turn, transmitted to the user that a connection to the IP address port has been established. Finally, the resource corresponding to the universal resource locator is accessed by the user.

### EXAMPLE I

A telephone number, "1 800 444 4257", including area and/or country code is input by a user. The browser plug-in then detects entry of a telephone number, and a telephone number-based locator service query is created. In particular, the telephone number is translated by the plug-in to a URL suitable for a PLS, for instance, "http://www.PSL. com? phonc=1800444 2257", then transmitted to a server-based PLS. Using a data table from the server database, the PLS matches the telephone number to a corresponding URL. The PLS then returns a new URL, namely, "http://www.gateway partners.com" and, in turn, directs the browser to the corresponding OEM page of Gateway® computers.

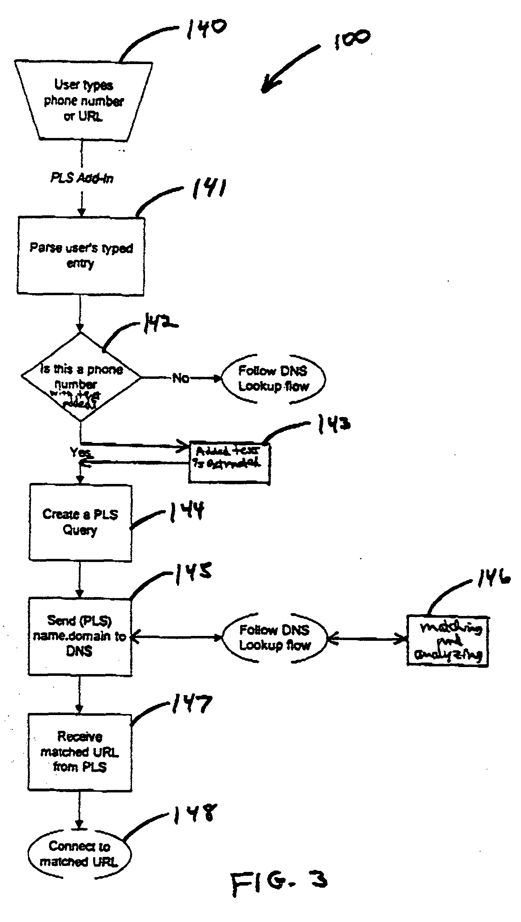

Referring now to FIG. 3, according to another aspect of the present invention, alternatively or concurrently with the foregoing, a resource locator is first input 140 to the stored program controlled apparatus for receiving user input information. Second, the resource locator input is parsed 141. If the locator is a telephone number with a text string added 142 after the number, then (i) the telephone number is identified and (ii) the text after the number is extracted 143 from the telephone number and text string indicated above. If the locator is not a telephone number with text string, then the resource locator is processed, as above, through a domain name service as shown in FIG. 2.

Next, a telephone number-based locator service query is created 144 and transmitted 145 to a PLS housed on the server. Again, the server database of the locator service includes memory table 61 of telephone numbers and corresponding universal resource locator addresses. The resource locator input is matched 146 to a similar or identical telephone number in the database and its corresponding first universal resource locator address. The matched first universal resource locator address is, in turn, matched to the resource from the telephone number-based locator service.

Thereafter, the text added after the number is preferably analyzed to determine whether the corresponding first universal resource locator address supports text-based queries. If so, a second universal resource locator is created which comprises the first universal resource locator address and the text added after the number. This second universal resource locator is transmitted 147 to the server, and a connection is opened 148 to an IP address port corresponding to the second universal resource locator address. Finally, the resource corresponding to the second universal resource locator is accessed by a user.

## EXAMPLE II

A telephone number, including area code or country code, with text added after the number, "1 800 444 4257, price list for Intel Pentium-based machines", is input by a user. Next, a browser plug-in detects a telephone number and that there is text following the number. The telephone number is identified and the text is extracted and analyzed. The plug-in then translates the number and text into a suitable URL, for instance, http://www. PSL.com?phone= 1800444257?query =price+list+for+Intel+Pentium-based+machines. Thereafter, this query is transmitted to a local database defined page of the server-based PLS. The PLS uses the telephone number to locate www.gatewaypartners. com. As for the text, the PLS notes that the Gateway® Web site supports queries. Accordingly, a new URL, "http:// www.PSL.com?query =price+list+for+ Intel+Pentium-based+machines", is created and the corresponding Web page is opened.

Overall, the present invention provides a powerful new method of navigating a communications network such as the Internet and, more specifically, for locating a resource such as a Web page using existing telephonic identifiers. A software shim is provided which allows a user to enter existing telephone numbers in the browser address line, in place of cryptic and often lengthy URLs, and successfully navigate directly to the Web site of choice. The vast telephone directory structure is merged with the equally vast cyberspace directory for maximizing location and identification tasks on-line.

This not only drastically simplifies the Web page location process, but also makes the precise location of a resource instantly accessible to the user. In providing direct entrée to the specific Web page desired within a site, the user need not use search engines nor parse through the layers of a Web page, as is typically necessary in conventional systems, to reach a desired resource destination. Moreover, extraordinarily fast navigation to an appropriate network location, whether a Web page or a specific page within a page, is supported using a tried and tested naming scheme, i.e., telephone numbers, and communications network, i.e., a telephone system.

Various modifications and alterations to the present invention may be appreciated based on a review of this disclosure. These changes and additions are intended to be within the scope and spirit of this invention as defined by the following claims.

### Claims

**1.** A method for locating and identifying information over an interactive communications network, the method comprising the steps of:

(i) inputting a resource locator to a stored program controlled apparatus for receiving user input information;
(ii) parsing the resource locator input;
(iii) if the resource locator is a telephone number, creating a telephone number-based locator service query;
(iv) transmitting the query to a telephone number-based locator service housed on a server;
(v) accessing a server database of the locator service having a table of telephone numbers and corresponding universal resource locator addresses;
(vi) matching the resource locator input to a telephone number in the database and corresponding universal resource locator addresses;
(vii) receiving the matched universal resource locator address from the telephone number-based locator service;
(viii) opening a connection to the IP address port corresponding to the universal resource locator; and

(ix) accessing the resource corresponding to the universal resource locator.

2. The method set forth in claim 1 wherein the resource locator is a telephone number.

3. A method for locating and identifying information over an interactive communications network, the method comprising the steps of:

(i) inputting a resource locator to a stored program controlled apparatus for receiving user input information;
(ii) parsing the resource locator input;
(iii) if the resource locator is a telephone number, creating a telephone number-based locator service query;
(iv) transmitting the query to a telephone number-based locator service housed on a server,
(v) accessing a server database of the locator service having a table of telephone numbers and corresponding universal resource locator addresses;
(vi) matching the resource locator input to a telephone number in the database and corresponding universal resource locator addresses;
(vii) receiving the matched universal resource locator address from the telephone number-based locator service;
(viii) opening a connection to the IP address port corresponding to the universal resource locator;
(ix) transmitting hypertext transport protocol confirmation to the user that a connection to the IP address port is established; and
(x) accessing the resource corresponding to the universal resource locator.

4. The method set forth in claim 3 wherein the resource locator is a telephone number.

5. A method for locating and identifying information over an interactive communications network, the method comprising the steps of:

(i) inputting a resource locator to a stored program controlled apparatus for receiving user input information;
(ii) parsing the resource locator input;
(iii) if the resource locator is a telephone number with text added after the number, identifying the telephone number;
(iv) extracting the text after the number from the telephone number and text string from step iii above;
(v) creating a telephone number-based locator service query
(vi) transmitting the query to a telephone number-based locator service housed on a server;
(vii) accessing a server database of the locator service having a table of telephone numbers and corresponding universal resource locator addresses;
(viii) matching the resource locator input to a telephone number in the database and corresponding first universal resource locator address;
(ix) receiving the matched first universal resource locator address from the telephone number-based locator service
(x) analyzing the text added after the number as to whether the corresponding first universal resource locator address supports text-based queries;
(xi) creating a second universal resource locator comprising the first universal resource locator address and the text added after the number;
(xii) transmitting the second universal resource locator to the server;
(xi) opening a connection to the IP address port corresponding to the second universal resource locator address; and
(xii) accessing the resource corresponding to the second universal resource locator.

6. A method for locating and identifying information over an interactive communications network, the method comprising the steps of:

(i) inputting a resource locator to a stored program controlled apparatus for receiving user input information;
(ii) parsing the resource locator input;
(iii) if the resource locator is a a telephone number with text added after the number, identifying the telephone number;
(iv) extracting the text after the number from the telephone number and text string from step iii above;
(v) creating a telephone number-based locator service query

(vi) transmitting the query to a telephone number-based locator service housed on a server;

(vii) accessing a server database of the locator service having a table of telephone numbers and corresponding universal resource locator addresses;

(viii) matching the resource locator input to a telephone number in the database and corresponding first universal resource locator address;

(ix) receiving the matched first universal resource locator address from the telephone number-based locator service

(x) analyzing the text added after the number as to whether the corresponding first universal resource locator address supports text-based queries;

(xi) creating a second universal resource locator comprising the first universal resource locator address and the text added after the number;

(xii) transmitting the second universal resource locator to the server;

(xi) opening a connection to the IP address port corresponding to the second universal resource locator address; and

(ix) transmitting hypertext transport protocol confirmation to the user that a connection to the IP address port is established; and

(x) accessing the resource corresponding to the second universal resource locator address.

7. A system for locating and identifying information over an interactive communications network, the system comprising a stored program controlled apparatus for receiving user input information; a server for providing telephone number-based locator service applications; a communications infrastructure linking the program controlled apparatus to the server; and a server database for maintaining telephone number-based resource locator information and corresponding universal resource locator address information.

8. A system for locating and identifying information over an interactive communications network, the system comprising:

a stored program controlled apparatus for receiving user input information;
a server for providing telephone number-based locator service applications, the server having a program for receiving and processing telephone number-based resource locator information input by a user;
a communications infrastructure linking the program controlled apparatus to the server; and
a server database for maintaining telephone number-based resource locator information and corresponding universal resource locator address information,
the program controlled apparatus having a first program for interactive network navigation, a second program for detecting telephone number-based resource locator input, and a third program for creating a telephone number-based locator service query and transmitting the query to the server.

9. A system for locating and identifying information oven an interactive communications network, the system comprising:

a stored program controlled apparatus for receiving user input information;
a server for providing telephone number-based locator service applications;
a communications infrastructure linking the program controlled apparatus to the server, and
a server database for maiataining telephone number-based resource locator information and corresponding universal resource locator address information,
the program controlled apparatus having a first program for interactive network navigation, a second program for detecting telephone number-based resource locator input, and a third program for creating a telephone number-based locator service query and transmitting the query to the server,
the server having an applications program for receiving and processing telephone number-based resource locator information input by a user, the program including a first function for accessing a server database of the locator service having a table of telephone numbers and corresponding universal resource locator addresses, a second function for matching the resource locator input to a telephone number in the database and corresponding universal resource locator addresses, a third function for receiving the matched universal resource locator address from the locator service, a fourh function for opening a connection to the IP address port corresponding to the universal resource locator, and a fifth function for transmitting hypertext transport protocol confirmation to the user that a connection to the IP address port is established.

130

User types
phone number
or URL

100

PLS Add-in

131

Parse user's typed
entry

132

Is this a phone
number ?  —No→  Follow DNS
Lookup flow

Yes

133

Create a PLS
Query

134

Send (PLS)
name.domain to
DNS  ←→  Follow DNS
Lookup flow  ←→  matching
input  135

136

Receive
matched URL
from PLS

137

Connect to
matched URL

FIG. 1

FIG. 2

*140*

```
         User types
      phone number
          or URL
```

*PLS Add-In*

*141*

```
      Parse user's typed
            entry
```

*142*

```
      Is this a phone
          number        ──No──→   Follow DNS
       with ....              Lookup flow
          ....?
```

*143*

Yes

```
                    Added text
                    is extracted
```

```
       Create a PLS
          Query
```

*144*

*145*

```
       Send (PLS)                                                              *146*
     name.domain to  ←──    Follow DNS    ←──        matching
          DNS               Lookup flow                and
                                                    analyzing
```

*147*

```
         Receive
      matched URL
         from PLS
```

*148*

```
        Connect to
       matched URL
```

FIG. 3

FIG. 4